# EUROPÄISCHE PATENTSCHRIFT

(11) **EP 3 669 341 B1**
(45) Veröffentlichungstag und Bekanntmachung des Hinweises auf die Patenterteilung: **02.11.2022**
(21) Anmeldenummer: 18758560.9
(22) Anmeldetag: 10.08.2018
(51) Int. Cl.: G08G 1/01, G08G 1/14, G01S 7/00, G01S 15/931, G06F 5/01, G07C 5/00

(54) **VERFAHREN, VORRICHTUNG UND COMPUTERLESBARES SPEICHERMEDIUM MIT INSTRUKTIONEN ZUM VERARBEITEN VON DATEN IN EINEM KRAFTFAHRZEUG FÜR EINEN VERSAND AN EIN BACKEND**
METHOD, DEVICE AND COMPUTER-READABLE STORAGE MEDIUM WITH INSTRUCTIONS FOR PROCESSING DATA IN A MOTOR VEHICLE FOR TRANSMISSION TO A BACK END
PROCÉDÉ, DISPOSITIF ET SUPPORT DE STOCKAGE LISIBLE PAR ORDINATEUR AVEC INSTRUCTIONS POUR LE TRAITEMENT DE DONNÉES DANS UN VÉHICULE AUTOMOBILE EN VUE D'UN ENVOIE À UN BACK-END

(30) Priorität: 16.08.2017 DE 102017214293
(43) Veröffentlichungstag der Anmeldung: 24.06.2020
(73) Patentinhaber: Volkswagen Aktiengesellschaft, 38440 Wolfsburg (DE)
(72) Erfinder: MAX, Stephan, 38518 Gifhorn (DE); SEREBRO, Vladislavs, 38102 Braunschweig (DE)
(86) Internationale Anmeldenummer: PCT/EP2018/071738
(87) Internationale Veröffentlichungsnummer: WO 2019/034552

(56) Entgegenhaltungen:
- DE-A1-102009 021 014
- DE-A1-102011 086 268
- DE-A1-102015 207 804
- US-B2- 7 821 421

## Beschreibung

Die vorliegende Erfindung betrifft ein Verfahren, eine Vorrichtung und ein computerlesbares Speichermedium mit Instruktionen zum Verarbeiten von Daten in einem Kraftfahrzeug für einen Versand an ein Backend. Die Erfindung betrifft weiterhin ein Kraftfahrzeug, in dem ein erfindungsgemäßes Verfahren oder eine erfindungsgemäße Vorrichtung eingesetzt wird.

Moderne Kraftfahrzeuge weisen oftmals Einparkhilfen auf. Dabei kann es sich beispielsweise um Abstandssensoren in Kombination mit akustischen oder visuellen Warnmeldungen oder auch um Rückfahrkameras handeln. Weitergehende Systeme erfassen den Raum eines möglichen Parkplatzes, um so eine mögliche Parkposition zu errechnen oder zu ermitteln, ob überhaupt ausreichend Raum zum Parken vorhanden ist. Hierfür kommen zum Beispiel Kameras oder Ultraschallsensoren zum Einsatz, die den Parkplatz vermessen.

Vor diesem Hintergrund beschreibt die DE 10 2015 206 457 A1 ein Einparkassistenzsystem für ein Fahrzeug zum Erfassen eines Parkplatzes in der Umgebung des Fahrzeugs. Eine Sensoreinheit erfasst die Anordnung und die Abmessungen des Parkplatzes und den Belegungszustand des Parkplatzes. Diese Daten übermittelt die Sensoreinheit an eine Recheneinheit, wobei die Recheneinheit auch außerhalb des Fahrzeugs angeordnet sein kann. Die Recheneinheit fusioniert die durch die Sensoreinheit erfassten Daten über den Parkplatz durch Kartendaten und/oder Belegungsinformationen, die in den digitalen Kartendaten enthalten sind.

In modernen Fahrzeugsystemen werden vielfach Daten aus Umfeldsensoren aufgezeichnet und zur Verwertung an Backend-Systeme geschickt. In Bezug auf Daten, die mittels der Sensorik eines Parkassistenten gewonnen werden, kann es sich bei den übertragenen Daten beispielsweise um die Rohdaten der Ultraschallsensoren, Informationen zu erkannten Objekten aus kombinierten Ultraschalldaten oder Informationen zu erkannten Parkplätzen handeln. Derartige Informationen sind insbesondere für eine servergestützte Parkplatzsuche von Interesse.

Beispielsweise beschreibt die DE 10 2015 207 804 A1 ein Verfahren zum Erkennen von Freiflächen, auf denen nicht geparkt werden darf, und/oder von Parkflächen, auf denen geparkt werden darf, wobei Fahrzeuge Informationen über mögliche Parkplätze an eine zentrale Computereinrichtung übermitteln. Bei dem Verfahren werden Positionen möglicher Parkplätze mit Hilfe von Umfeldsensoren der Fahrzeuge erfasst. Es folgt eine Bewertung der erfassten möglichen Parkplätze anhand der von den Umfeldsensoren erfassten Daten, wobei eine Kategorisierung vorgenommen wird. Die möglichen Parkplätze werden zusammen mit deren Position sowie gegebenenfalls weiteren Daten in eine Datenbank der zentralen Computereinrichtung aufgenommen.

Des Weiteren beschreibt die DE 10 2012 218 334 A1 ein Verfahren zum Auffinden eines Parkplatzes für ein Fahrzeug in einem Zielgebiet. In einem Verbindungsserver sind dem Zielgebiet zugeordnete Verbindungsdaten zu mehreren Datenservern gespeichert. In den Datenservern sind jeweils Daten zu mindestens einem Parkplatz gespeichert. In einem ersten Schritt wird eine Suchanforderung zum Auffinden eines Parkplatzes im Zielgebiet an den Verbindungsserver gerichtet. Der Verbindungsserver stellt daraufhin anhand der Zuordnungsdaten eine Verbindung zu den Datenservern her und fragt dabei ab, ob in der jeweiligen Datenbank Verfügbarkeitsdaten über verfügbare Parkplätze im Zielgebiet gespeichert sind. Falls Verfügbarkeitsdaten vorliegen, werden von den jeweiligen Datenservern erste Rückmeldungsdaten an den Verbindungsserver übertragen. Auf Basis der ersten Rückmeldungsdaten wird im Verbindungsserver entschieden, welche der jeweiligen Datenserver vorausgewählt werden. Dann wird aus den vorausgewählten Datenservern zumindest ein Datenserver als Auswahlserver ausgewählt. In einer zweiten Abfrage-Stufe werden zu dem Auswahlserver jeweils zweite Rückmeldungsdaten abgerufen, die zumindest hinsichtlich des Parkplatzortes detaillierter sind als die jeweiligen ersten Rückmeldungsdaten.

Problematisch ist oftmals die Vielzahl an Daten, welche vom Kraftfahrzeug an das Backend übertragen werden muss. Wird beispielsweise alle 25ms eine Messung durchgeführt, welche einen Abstandspunkt mit einer 10bit Auflösung ermittelt, ergibt sich daraus eine Datenrate von 400 Bit pro Sekunde.

Es ist eine Aufgabe der Erfindung, Lösungen für eine Verarbeitung von Daten in einem Kraftfahrzeug für einen Versand an ein Backend aufzuzeigen, die eine Reduzierung der zu übertragenden Datenmenge ermöglichen.

Diese Aufgabe wird durch ein Verfahren mit den Merkmalen des Anspruchs 1, durch ein computerlesbares Speichermedium mit Instruktionen gemäß Anspruch 8 und durch eine Vorrichtung mit den Merkmalen des Anspruchs 9 gelöst. Bevorzugte Ausgestaltungen der Erfindung sind Gegenstand der abhängigen Ansprüche.

Gemäß einem ersten Aspekt der Erfindung umfasst ein Verfahren zum Verarbeiten von Daten in einem Kraftfahrzeug für einen Versand an ein Backend die Schritte:
- Erfassen von Sensordaten entlang einer Wegstrecke des Kraftfahrzeugs;
- Einteilung der Wegstrecke in Segmente;
- Identifizieren von Merkmalen und Kontextinformationen zu den Merkmalen innerhalb der Segmente der Wegstrecke anhand der Sensordaten, wobei die Merkmale Objekte entlang der Wegstrecke klassifizieren und die Kontextinformationen zu den Merkmalen senkrecht zur Wegstrecke bestimmte Abstände zwischen dem Kraftfahrzeug und einem erkannten Objekt oder parallel zur Wegstrecke bestimmte Abstände zwischen einer Segmentgrenze und dem Anfang oder Ende eines Objekts beschreiben; und
- Zusammenfassen der Merkmale und der Kontextinformationen zu den Merkmalen zu einer Nachricht für die Wegstrecke, die die Anordnung der erkannten Objekte entlang der Wegstrecke beschreibt.

Gemäß einem weiteren Aspekt der Erfindung enthält ein computerlesbares Speichermedium Instruktionen nach Anspruch 8.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zum Verarbeiten von Daten in einem Kraftfahrzeug für einen Versand an ein Backend auf:
- einen Eingang, der eingerichtet ist, entlang einer Wegstrecke des Kraftfahrzeugs erfasste Sensordaten zu empfangen;
- eine Analyseeinheit, die eingerichtet ist, die Wegstrecke in Segmente zu unterteilen und Merkmale und Kontextinformationen zu den Merkmalen innerhalb der Segmente der Wegstrecke anhand der Sensordaten zu identifizieren, wobei die Merkmale Objekte entlang der Wegstrecke klassifizieren und die Kontextinformationen zu den Merkmalen senkrecht zur Wegstrecke bestimmte Abstände zwischen dem Kraftfahrzeug und einem erkannten Objekt oder parallel zur Wegstrecke bestimmte Abstände zwischen einer Segmentgrenze und dem Anfang oder Ende eines Objekts beschreiben; und
- eine Datenverarbeitungseinheit, die eingerichtet ist, die Merkmale und die Kontextinformationen zu den Merkmalen zu einer Nachricht für die Wegstrecke zusammenzufassen, die die Anordnung der erkannten Objekte entlang der Wegstrecke beschreibt.

Erfindungsgemäß wird ein von einem Fahrzeug ermitteltes Datenprofil zunächst in einzelne Wegstrecken, d.h. Abschnitte unterteilt. Für jeden Abschnitt soll zumindest eine Nachricht generiert werden. Zur Reduzierung der Datenmenge wird jeder Abschnitt wiederum in Segmente aufgeteilt, beispielsweise in acht Segmente, wobei für jedes Segment ein Merkmal und gegebenenfalls eine Kontextinformation zu dem Merkmal ermittelt wird. Anders ausgedrückt, es wird eine Abstraktion des Datenprofils durchgeführt. Die derart reduzierten Daten werden zu einem Datenblock pro Abschnitt zusammengefasst, d.h. zu einer Nachricht. Die resultierende Nachricht wird vorzugsweise an das Backend übermittelt. Durch die erfindungsgemäße Verarbeitung der Daten lässt sich der gewünschte Versand der Daten an das Backend mit einem deutlich kleinerem Datenvolumen realisieren.

Die Merkmale beschreiben dabei das Vorhandensein von Objekten entlang der Wegstrecke. Insbesondere für die Erfassung von Parkplätzen spielen die konkreten gemessenen Abstände nur eine geringe Rolle. Von deutlich größerem Interesse ist die Frage, ob Parkflächen von Fahrzeugen belegt sind oder nicht bzw. ob eventuell vorhandene Lücken zwischen einzelnen Fahrzeugen auch tatsächlich Parkplätze sind. Derartige Fragestellungen lassen sich leicht anhand der Informationen zum Vorhandensein von Objekten klären. Die Kontextinformationen zu den Merkmalen beschreiben senkrecht zur Wegstrecke bestimmte Abstände zwischen dem Kraftfahrzeug und einem erkannten Objekt oder parallel zur Wegstrecke bestimmte Abstände zwischen einer Segmentgrenze und dem Anfang oder Ende eines Objekts. Diese Kontextinformationen erlauben es dem Backend, auch die konkreten Abmessungen von Parklücken zu bestimmen. Auf diese Weise können die Fahrer anderer Fahrzeuge zielgerichteter bei der Parkplatzsuche unterstützt werden. Insbesondere kann so überprüft werden, ob eine Parklücke ausreichend groß für ein gegebenes Fahrzeug ist, bevor dieses Fahrzeug zur Parklücke gelotst wird.

Ein weiterer Vorteil besteht darin, dass ein möglicher Datenverlust nur zur einem lokalen Ausfall der Daten führt, aber nicht den kompletten Datensatz schädigt. Wird eine fehlerhafte Datenübertragung erkannt, z.B. anhand einer oder mehrerer gemäß einem Kommunikationsprotokoll für die Identifikation von defekten Datenteilen vorgesehenen Prüfsummen, so gehen lediglich die Messungen aus dem zugeordneten Zeitintervall verloren. Die Messungen vor und nach der Messung bleiben jedoch erhalten und können ausgewertet werden.

Gemäß einem Aspekt der Erfindung handelt es sich bei den Sensordaten um ein Abstandsprofil, das durch Abstandssensoren des Kraftfahrzeugs ermittelt wird. Die Anwendung der erfindungsgemäßen Lösungen auf das Abstandsprofil ist besonders vorteilhaft, da dabei keine wesentlichen Informationen verloren gehen. Durch eine Abstraktion der Abstandsdaten in Hinblick auf Merkmale und Kontextinformationen anstelle einer direkten Übertragung der gemessenen Abstände lässt sich das anfallenden Datenvolumen von ursprünglich 400 Bit pro Sekunde auf etwa 60 Bit pro Sekunde reduzieren.

Gemäß einem Aspekt der Erfindung handelt es sich bei den Merkmalen um eines oder mehrere der folgenden Elemente: Objekt mit konstantem Abstand, Objekt mit variablem Abstand, Freibereich, Anfang eines Objekts, Ende eines Objekts, Anfang eines erkannten niedrigen Objekts, Ende eines erkannten niedrigen Objekts, Keine Daten. Diese Merkmale sind für eine weitgehend vollständige Beschreibung des Abstandsprofils in Hinblick auf die beschriebene Anwendung ausreichend, so dass lediglich ein Minimum an Daten übermittelt wird.

Gemäß einem Aspekt der Erfindung werden die senkrecht zur Wegstrecke bestimmten Abstände prozentual in Bezug auf einen maximal detektierbaren Abstand angegeben und die parallel zur Wegstrecke bestimmten Abstände prozentual in Bezug auf die Länge eines Segments angegeben. Durch die Nutzung von Prozentangaben kann sichergestellt werden, dass unabhängig von der Größe der Segmente oder des Messbereichs eine gewünschte Anzahl Bits zum Kodieren der Kontextinformationen ausreicht.

Gemäß einem Aspekt der Erfindung ist die Wegstrecke durch eine in einem vorgegebenen Zeitintervall zurückgelegte Strecke bestimmt. Vorzugsweise ist das Zeitintervall 1 Sekunde, so dass die Nachrichten unabhängig von der Geschwindigkeit des Fahrzeugs mit 1Hz generiert werden.

Besonders vorteilhaft werden ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Verarbeiten von Daten in einem Kraftfahrzeug für einen Versand an ein Backend;
- Fig. 2: zeigt eine erste Ausführungsform einer Vorrichtung zum Verarbeiten von Daten in einem Kraftfahrzeug für einen Versand an ein Backend;
- Fig. 3: zeigt eine zweite Ausführungsform einer Vorrichtung zum Verarbeiten von Daten in einem Kraftfahrzeug für einen Versand an ein Backend;
- Fig. 4: stellt schematisch ein Kraftfahrzeug dar, in dem eine erfindungsgemäße Lösung realisiert ist;
- Fig. 5: zeigt eine beispielhafte Ultraschallmessung mit einem ermittelten Abstandsprofil;
- Fig. 6: zeigt exemplarisch eine Zerlegung einer zurückgelegten Strecke in einzelne in einem vorgegebenen Zeitintervall zurückgelegte Wegstrecken mit anschließender Segmentierung;
- Fig. 7: zeigt beispielhaft erkannte Merkmale pro Segment gemäß einer ersten Ausführungsform der Erfindung;
- Fig. 8: zeigt beispielhaft Kontextinformationen pro Segment gemäß der ersten Ausführungsform der Erfindung; und
- Fig. 9: zeigt schematisch den Inhalt einer Nachricht entsprechend einer zweiten Ausführungsform der Erfindung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

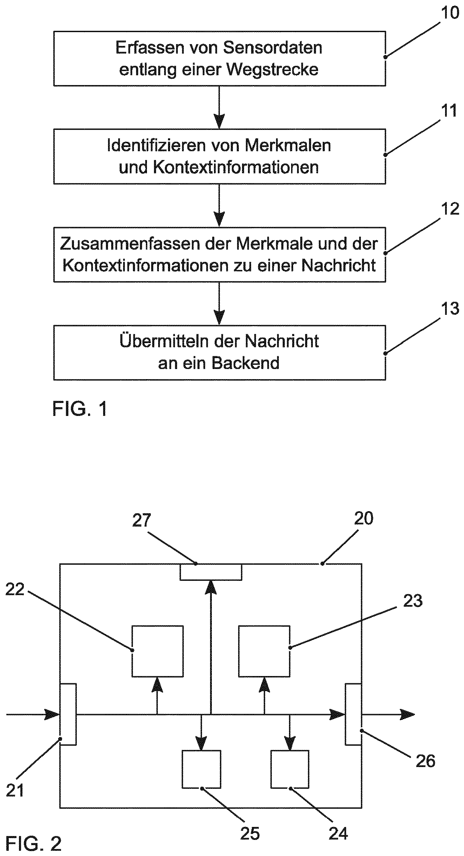

Fig. 1 zeigt schematisch ein Verfahren zum Verarbeiten von Daten in einem Kraftfahrzeug für einen Versand an ein Backend. In einem ersten Schritt werden Sensordaten entlang einer Wegstrecke des Kraftfahrzeugs erfasst 10. Bei den Sensordaten kann es sich beispielsweise um ein Abstandsprofil handeln, das durch Abstandssensoren des Kraftfahrzeugs ermittelt wird. Anhand der Sensordaten werden dann Merkmale und Kontextinformationen zu den Merkmalen innerhalb von Segmenten der Wegstrecke identifiziert 11. Die Merkmale können z.B. das Vorhandensein von Objekten entlang der Wegstrecke beschreiben. Die Kontextinformationen zu den Merkmalen beschreiben dann vorzugsweise senkrecht zur Wegstrecke bestimmte Abstände zwischen dem Kraftfahrzeug und einem erkannten Objekt oder parallel zur Wegstrecke bestimmte Abstände zwischen einer Segmentgrenze und dem Anfang oder Ende eines Objekts. Die Merkmale und die Kontextinformationen zu den Merkmalen werden schließlich zu einer Nachricht für die Wegstrecke zusammengefasst 12. Die resultierende Nachricht wird anschließend an das Backend übermittelt 13. Die Wegstrecke ist vorzugsweise durch eine in einem vorgegebenen Zeitintervall zurückgelegte Strecke bestimmt, d.h. die Nachrichten werden mit einem vorgegebenen Takt unabhängig von der Geschwindigkeit des Kraftfahrzeugs generiert.

Fig. 2 zeigt eine vereinfachte schematische Darstellung einer ersten Ausführungsform einer Vorrichtung 20 zum Verarbeiten von Daten in einem Kraftfahrzeug für einen Versand an ein Backend. Die Vorrichtung 20 hat einen Eingang 21, über den entlang einer Wegstrecke des Kraftfahrzeugs erfasste Sensordaten empfangen werden können. Die Sensordaten können natürlich auch von Sensoren stammen, die Bestandteil der Vorrichtung 20 sind. Bei den Sensordaten kann es sich beispielsweise um ein Abstandsprofil handeln, das durch Abstandssensoren des Kraftfahrzeugs ermittelt wird. Die Vorrichtung 20 hat zudem eine Analyseeinheit 22 zum Identifizieren von Merkmalen und Kontextinformationen zu den Merkmalen innerhalb von Segmenten der Wegstrecke anhand der Sensordaten. Die Merkmale können z.B. das Vorhandensein von Objekten entlang der Wegstrecke beschreiben. Die Kontextinformationen zu den Merkmalen beschreiben dann vorzugsweise senkrecht zur Wegstrecke bestimmte Abstände zwischen dem Kraftfahrzeug und einem erkannten Objekt oder parallel zur Wegstrecke bestimmte Abstände zwischen einer Segmentgrenze und dem Anfang oder Ende eines Objekts. Die Wegstrecke ist vorzugsweise durch eine in einem vorgegebenen Zeitintervall zurückgelegte Strecke bestimmt. Eine Datenverarbeitungseinheit 23 fasst die Merkmale und die Kontextinformationen zu den Merkmalen zu einer Nachricht für die Wegstrecke zusammen. Die Analyseeinheit 22 und die Datenverarbeitungseinheit 23 können von einer Kontrolleinheit 24 gesteuert werden. Über eine Benutzerschnittstelle 27 können gegebenenfalls Einstellungen der Analyseeinheit 22, der Datenverarbeitungseinheit 23 oder der Kontrolleinheit 24 geändert werden. Die in der Vorrichtung 20 anfallenden Daten, z.B. die erzeugten Nachrichten oder andere von der Analyseeinheit 22 oder der Datenverarbeitungseinheit 23 generierte Daten, können in einem Speicher 25 der Vorrichtung 20 abgelegt werden, beispielsweise für eine spätere Auswertung oder für eine Nutzung durch die Komponenten der Vorrichtung 20. Insbesondere die erzeugten Nachrichten können zudem über einen Ausgang 26 der Vorrichtung 20 ausgegeben werden. Die Analyseeinheit 22, die Datenverarbeitungseinheit 23 sowie die Kontrolleinheit 24 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 26 können als getrennte Schnittstellen oder als eine kombinierte bidirektionale Schnittstelle implementiert sein.

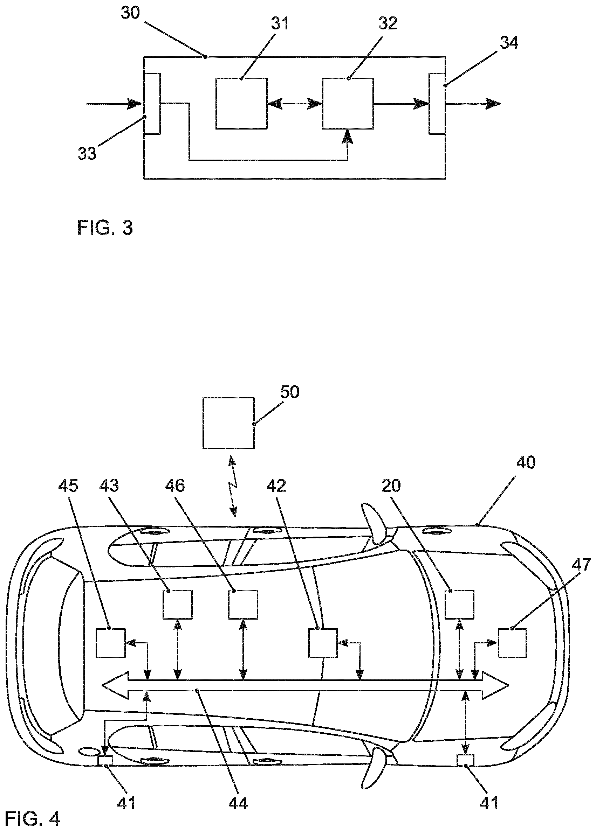

Fig. 3 zeigt eine vereinfachte schematische Darstellung einer zweiten Ausführungsform einer Vorrichtung 30 zum Verarbeiten von Daten in einem Kraftfahrzeug für einen Versand an ein Backend. Die Vorrichtung 30 weist einen Prozessor 32 und einen Speicher 31 auf. Beispielsweise handelt es sich bei der Vorrichtung 30 um einen Computer oder ein Steuergerät.

Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Sensordaten. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Kraftfahrzeug 40 dar, in dem eine erfindungsgemäße Lösung realisiert ist. Das Kraftfahrzeug 40 weist unter anderem Ultraschallsensoren 41 auf, von denen beispielhaft zwei auf der rechten Fahrzeugseite dargestellt sind und durch die ein Abstandsprofil ermittelt wird. Das Abstandsprofil wird beispielsweise von einem Parklenkassistenten 47 genutzt. Weitere Daten können von einer Umgebungssensorik 42, beispielsweise einem Kamera- oder Radarsystem, sowie einem Navigationssystem 43 erfasst werden. Die erfassten Daten werden über ein Netzwerk 44 an eine Vorrichtung 20 zum Verarbeiten von Daten für einen Versand an ein Backend 50 übermittelt. Die von der Vorrichtung 20 generierten Daten können in einem Speicher 45 des Kraftfahrzeugs 40 abgelegt werden. Sie können zudem mittels einer Datenübertragungseinheit 46 an das Backend 50 übermittelt werden.

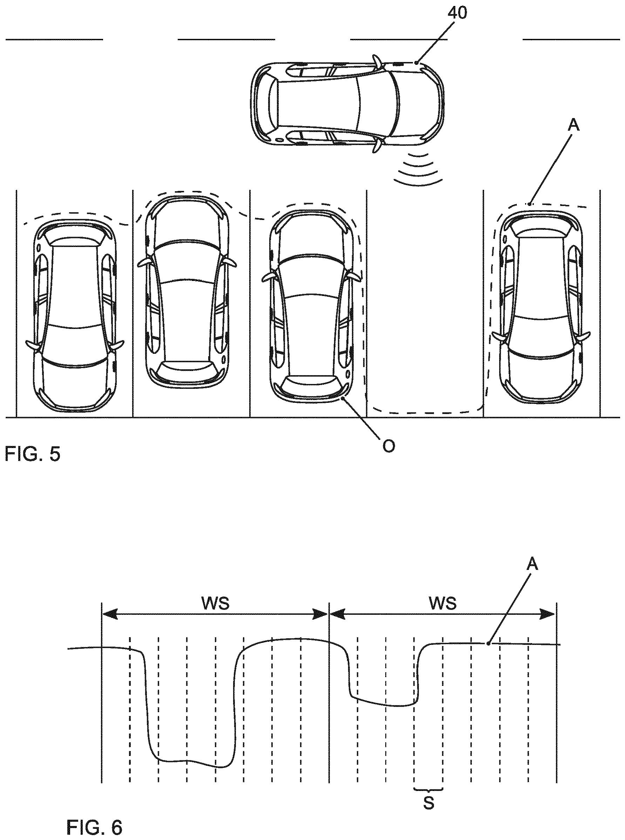

Nachfolgend sollen bevorzugte Ausführungsformen der Erfindung anhand der Figuren 5 bis 9 beschrieben werden. In diesen Ausführungsformen handelt es sich bei den Sensordaten um Abstandsdaten, die mittels der Ultraschallsensoren eines Parklenkassistenten ermittelt werden. Selbstverständlich können aber auch andere Sensordaten verarbeitet werden, beispielsweise Daten zur Straßenoberfläche oder zu, Verkehrsfluss. Die Kontextinformationen können dabei an die jeweiligen ermittelten Daten angepasst werden.

Fig. 5 zeigt eine beispielhafte Ultraschallmessung mit einem ermittelten Abstandsprofil A. Ausgegangen wird von der Abstandsmessung der seitlichen Ultraschallsensoren am Kraftfahrzeug 40. Diese messen senkrecht zur Fahrtrichtung den Abstand zu möglichen Objekten O im Nahbereich. Hierbei werden die Abstände ständig mittels einer Laufzeitmessung eines Ultraschallsignals ermittelt, wobei üblicherweise die Zeit zwischen dem Sendeimpuls und dem Echo innerhalb eines Zeitintervalls gemessen wird. Wird innerhalb des Zeitintervalls kein Echo empfangen, wird von einem Freibereich ausgegangen. Diese Messung wird in aktuellen Fahrzeugen z.B. zum Vermessen von Parklücken verwendet. Hierbei fährt das Fahrzeug an den geparkten Fahrzeugen vorbei und führt in kurzen Abständen eine Abstandsmessung durch.

In Kombination mit den bekannten Fahrzeugbewegungen werden die Abstände ortsrichtig kombiniert, so dass sich ein Abstandsprofil bzw. Abstandsscan A ergibt. Aus dem Abstandsprofil A können freie Parkplätze ermittelt werden. Das Abstandsprofil A kann zudem für die Planung von Parkmanövern verwendet werden. Für zukünftige Anwendungen ist es wünschenswert, dieses Abstandsprofil an Backenddienste zu versenden. Diese Backenddienste übertragen die Abstandsprofile auf bekannte Straßenkarten und ermitteln aus den Abstandsprofilen in Kombination mit weiteren Kartendaten die aktuell verfügbaren Parkplätze. Die resultierenden Information können an weitere Fahrzeuge übertragen werden und den Fahrern bei der Parkplatzsuche helfen.

Fig. 6 zeigt exemplarisch eine Zerlegung einer zurückgelegten Strecke in einzelne in einem vorgegebenen Zeitintervall zurückgelegte Wegstrecken WS mit anschließender Segmentierung. Der Abstandsscan wird dazu in eine Reihe von Wegstrecken bzw. Abschnitten WS unterteilt, die während der Messung vom Fahrzeug jeweils innerhalb einer bestimmten Zeit abgefahren wurden. Im Beispiel handelt es sich um Abschnitte WS, die vom Fahrzeug innerhalb einer Sekunde befahren wurden. Jeder Abschnitt WS wird im dargestellten Beispiel in acht Segmente S unterteilt. Für jeden Abschnitt WS wird eine Nachricht erzeugt, d.h. die Nachrichten werden mit 1Hz gesendet, unabhängig von der Geschwindigkeit des Fahrzeugs. Anders gesagt, bei einer Geschwindigkeit von 20m/s beschreibt die Nachricht eine Messung über 20m, bei einer Geschwindigkeit von z.B. 5m/s lediglich eine Messung über 5m, allerdings mit einer höheren räumlichen Auflösung.

Innerhalb der Segmente S wird nach Merkmalen gesucht. Gemäß einer ersten Ausführungsform handelt es sich bei diesen Merkmalen um die folgenden Elemente:
- Objekt mit konstantem Abstand
- Objekt mit variablem Abstand
- Freibereich
- Anfang eines Objekts
- Ende eines Objekts
- Anfang eines erkannten niedrigen Objekts
- Ende eines erkannten niedrigen Objekts
- Keine Daten

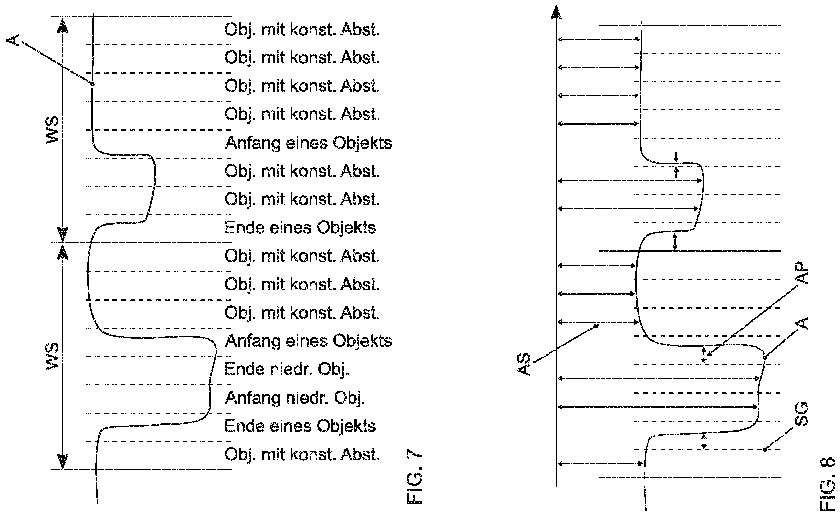

Fig. 7 zeigt beispielhaft das für jedes Segment aus Fig. 6 anhand der Sensordaten erkannte Merkmal. Niedrige Objekte, beispielsweise Bordsteine, können gegebenenfalls durch die Verwendung zusätzlicher Daten erkannt werden, falls dies aus des Sensordaten der Ultraschallsensoren nicht möglich ist. Die erkannten Merkmale werden mit einer ID Klassifiziert und zumindest teilweise mit Kontextinformationen angereichert.

Mögliche Kontextinformationen sind in Fig. 8 dargestellt. Bei Sprüngen im gemessenen Abstand, die normalerweise aus dem Anfang oder dem Ende eines Objekts resultieren, besteht die Kontextinformation aus dem Abstand AP zwischen der vorherigen Segmentgrenze SG und dem Anfang bzw. dem Ende des Objekts parallel zur Fahrzeugbewegung. Falls der gemessen Abstand keine Sprünge aufweist, d.h. bei im Wesentlichen konstanten Abstand zu einem Objekt, besteht die Kontextinformation aus dem senkrecht zur Fahrzeugbewegung gemessenen Abstand AS zwischen dem Kraftfahrzeug und dem Objekt.

Kodiert werden die Information in zwei Variablen, einer ID mit zwei Bit, d.h. dem Wertebereich 0-3, und einem Kontext mit fünf Bit, d.h. dem Wertebereich 0-31. Um alle Merkmale durch die Variablen zu beschreiben, werden die ID und die Werte 30 und 31 des Kontexts verwendet. Der Wertebereich 0-29 des Kontexts wird für die Kodierung der Messwerte als Kontextinformation verwendet. Für die Kodierung kann beispielsweise die nachfolgende Kodierungstabelle genutzt werden:

| **Kontext** | | **ID** | | | |
|---|---|---|---|---|---|
| | | 0 | 1 | 2 | 3 |
| Messwerte | 0 | Ende eines Objekts | Anfang eines Objekts | Objekt mit konstantem Abstand | Objekt mit variablem Abstand |
| | ... | | | | |
| | 29 | | | | |
| Logische Werte | 30 | Freibereich | void | Ende eines erkannten niedrigen | void |
| | | | | Objekts | |
| | 31 | Anfang eines erkannten niedrigen Objekts | void | Keine Daten | void |

Hierbei wird z.B. für einen "Freibereich" ID=0 und Kontext=30 vergeben, während bei fehlenden Daten ID=2 und Kontext=31 vergeben wird.

Für die Verwendung von ID und Kontext kann die folgende Logik genutzt werden, wobei für jedes Merkmal jeweils die Bedingungen und die Werte von ID und Kontext angegeben sind:
Merkmal: Freibereich
Bedingung: Im Segment wurde kein Echo empfangen.
ID: 0
Kontext: 30
Merkmal: Keine Daten
Bedingung: Innerhalb des Segments ist keine Messung erfolgt.
ID: 2
Kontext: 31
Merkmal: Ende eines Objekts
Bedingung: Der Gradient zweier benachbarter Einzelmessungen in einem Segment hat ein negatives Vorzeichen und der Betrag dieses Gradienten ist größer als 1m.
ID: 0
Kontext: Prozentuale Position des größten Gradienten im Segment entlang der Fahrtrichtung (Position/Länge des Segments).
Merkmal: Anfang eines Objekts
Bedingung: Der Gradient zweier benachbarter Einzelmessungen in einem Segment hat ein positives Vorzeichen und der Betrag dieses Gradienten ist größer als 1m.
ID: 1
Kontext: Prozentuale Position des größten Gradienten im Segment entlang der Fahrtrichtung (Position/Länge des Segments).
Merkmal: Objekt mit konstantem Abstand
Bedingung: Die Summe aller Gradienten in einem Segment ist kleiner als 1m.
ID: 2
Kontext: Prozentualer Abstand zwischen dem Objekt und dem Fahrzeug senkrecht zur Fahrtrichtung (Abstand/Maximal detektierbarer Abstand). Hierbei ist der kleinste Abstand zu wählen.
Merkmal: Objekt mit variablem Abstand
Bedingung: Die Summe aller Gradienten in einem Segment ist größer als oder gleich 1m und kein Einzelgradient in diesem Segment ist größer als oder gleich 1m.
ID: 3
Kontext: Prozentualer Abstand zwischen dem Objekt und dem Fahrzeug senkrecht zur Fahrtrichtung (Abstand/Maximal detektierbarer Abstand). Hierbei ist der kleinste Abstand zu wählen.
Merkmal: Anfang eines erkannten niedrigen Objekts
Bedingung: Der erste Wert im Segment ist kein "erkanntes niedriges Objekt" und der letzte Wert im Segment ist ein "erkanntes niedriges Objekt".
ID: 0
Kontext: 31
Merkmal: Ende eines erkannten niedrigen Objekts
Bedingung: Der erste Wert im Segment ist ein "erkanntes niedriges Objekt" und der letzte Wert im Segment ist kein "erkanntes niedriges Objekt".
ID: 2
Kontext: 30

Für den Fall, dass unterschiedliche Merkmale gleichzeitig in einem Segment auftreten, kann eine Priorisierung wie folgt aussehen, wobei jeweils die Voraussetzungen und das Ergebnis angegeben sind:
Erstes Merkmal: Anfang eines Objekts oder Ende eines Objekts
Zweites Merkmal: Anfang eines erkannten niedrigen Objekts oder Ende eines erkannten niedrigen Objekts
Resultierendes Merkmal: Anfang eines erkannten niedrigen Objekts oder Ende eines erkannten niedrigen Objekts
Hinweis: Ein erkanntes niedriges Objekt wird immer höher priorisiert als Anfang und Ende eines Objekts
Erstes Merkmal: Objekt mit konstantem Abstand oder Objekt mit variablem Abstand Zweites Merkmal: Anfang eines erkannten niedrigen Objekts oder Ende eines erkannten niedrigen Objekts
Resultierendes Merkmal: Anfang eines erkannten niedrigen Objekts oder Ende eines erkannten niedrigen Objekts
Hinweis: Ein erkanntes niedriges Objekt wird immer höher priorisiert als ein Objektstatus

Wenn mehrere Merkmale in einem Segment nacheinander auftreten, dann soll stets das neuere Merkmal ausgegeben werden.

Schließlich werden die ermittelten Daten zusammengefasst, vorzugsweise in getrennten Nachrichten für die linke und die rechte Fahrzeugseite. Dazu können beispielsweise CAN-Nachrichten (CAN: Controller Area Network) genutzt werden.

Eine exemplarische Nachricht PLA_SDA_01 für die linke Fahrzeugseite kann wie folgt aufgebaut sein:
- PLA_SDA_Li_ID_1
- PLA_SDA_Li_Kontext_1
- PLA_SDA_Li-ID_2
- PLA_SDA_Li_Kontext_2
- PLA_SDA_Li_ID_3
- PLA_SDA_Li_Kontext_3
- PLA_SDA_Li_ID_4
- PLA_SDA_Li_Kontext_4
- PLA_SDA_Li_ID_5
- PLA_SDA_Li_Kontext_5
- PLA_SDA_Li_ID_6
- PLA_SDA_Li_Kontext_6
- PLA_SDA_Li_ID_7
- PLA_SDA_Li_Kontext_7
- PLA_SDA_Li_ID_8
- PLA_SDA_Li_Kontext_8

In der Nachricht werden einfach die ID und die Kontextwerte für die jeweiligen Segmente nacheinander aufgeführt. In einer weiteren Nachricht PLA_SDA_02 kann die rechte Fahrzeugseite übertragen werden. Somit steht ein statisches Protokoll für die Übertragung der Daten über das Bussystem des Fahrzeugs zur Verfügung.

Gemäß einer zweiten Ausführungsform handelt es sich bei den Merkmalen um die folgenden Elemente:
- Kein Objekt
- Objekt parallel zur Fahrtrichtung (parallel zur Fahrbahn geparktes Fahrzeug, ± 20 Grad Toleranz)
- Objekt senkrecht zur Fahrtrichtung (senkrecht zur Fahrbahn geparktes Fahrzeug, ± 20 Grad Toleranz)
- Anderes Objekt (Schräg geparktes Fahrzeug und sonstige Objekte)
- Bordstein
- Fortsetzung eines Objekts (Fortführung eines Objekts auf dem vorherigen Segment, sofern im aktuellen Segment kein neues Objekt anfängt)

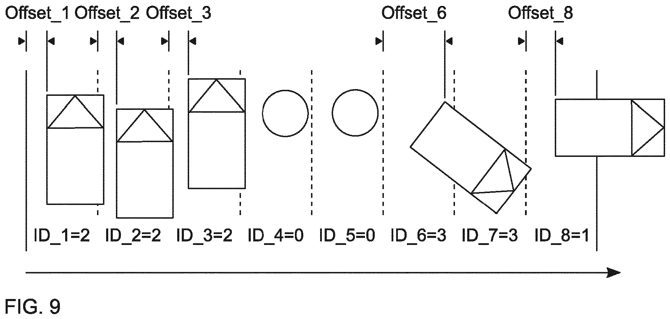

Bei dieser Ausführungsform werden mögliche erkannte Objekte in Gruppen klassifiziert und hinsichtlich ihres Abstands zur Segmentgrenze definiert. Die Kontextinformation besteht daher lediglich aus den Abständen zu den Segmentgrenzen. Der Inhalt einer Nachricht entsprechend dieser Ausführungsform ist in Fig. 9 schematisch dargestellt. Vorzugsweise wird die Größe der Segmente so ausgelegt, dass ein Segment niemals mehr als ein relevantes Objekt enthält. So kann erreicht werden, dass durch das Datenformat keine Elemente verloren gehen.

Die dazugehörige Struktur kann dann beispielsweise wie folgt aussehen (exemplarisch im "Protocol Buffers" Datenformat formuliert):

```
 message Parking_Scan_Left
 {
      required int64 timeStampUTC_ms = 1;
      required ParkingUssScanData parkingData = 2;
 }
 
 message Parking_Scan_Right
 {
      required int64 timeStampUTC_ms = 1;
      required ParkingUssScanData parkingData = 2;
 }
 
 message ParkingUssScanData
 {
      enum ParkSegementStateEnum
      {
             NO_OBJECT_DETECTED = 0; //(Kein Objekt)
             LONGITUDINAL_OBJECT = 1; //(Objekt parallel zur Fahrtrichtung)
             VERTICAL_OBJECT = 2; //(Objekt senkrecht zur Fahrtrichtung)
             ANY_OBJECT = 3; //(Anderes Objekt)
             CURBSTONES = 4; //(Bordstein)
             OBJECT_CONTINUED = 5; //(Fortsetzung eines Objekts)
      }
      required ParkSegementStateEnum_ID_1 = 1;
      required uint32 offset_1 = 2;
      required ParkSegementStateEnum_ID_2 = 3;
      required uint32 offset_2 = 4;
      required ParkSegementStateEnum_ID_3 = 5;
      required uint32 offset_3 = 6;
      required ParkSegementStateEnum_ID_4 = 7;
      required uint32 offset_4 = 8;
      required ParkSegementStateEnum_ID_5 = 9;
      required uint32 offset_5 =10;
      required ParkSegementStateEnum_ID_6 = 11;
      required uint32 offset_6 = 12;
      required ParkSegementStateEnum_ID_7 = 13;
      required uint32 offset_7 = 14;
      required ParkSegementStateEnum_ID_8 = 15;
      required uint32 offset_8 = 16;
 }
```

Komplementiert werden können die an das Backend übertragenen Daten durch zusätzliche Informationen vom Fahrzeug, beispielsweise Zeitstempel, GPS-Positionsdaten, Kamera-Spurdaten oder die Geschwindigkeit. Diese werden bereits für andere Funktionen genutzt, so dass keine zusätzlichen Kosten für die Erhebung dieser Informationen anfallen.

Mithilfe der Geschwindigkeit können die Segmente im Backend in der zeitlich richtigen Reihenfolge gemäß Zeitstempel zu dem ursprünglichen Abstandsprofil zusammengesetzt werden. Dieses kann dann über die GPS-Position auf die zugehörigen Kartenposition gelegt werden.

Die Generierung der Nachrichten kann auf einen gewissen Geschwindigkeitsbereich beschränkt werden. Hierdurch kann beispielsweise der Versand von Nachrichten im Stand oder bei höheren Geschwindigkeiten, wo keine sichere Messung des Parksystems mehr gegeben ist, unterdrückt werden.

Ein weiterer Vorteil der beschriebenen Verarbeitung der Daten besteht darin, dass das Protokoll bei der Weiterverarbeitung reduziert werden kann. Dies kann beispielsweise durch das Wegfallen von Merkmalen umgesetzt werden.

Im einfachsten Fall können alle Merkmalsdaten, welche einen Freibereich kennzeichnen, in einem weiteren Schritt entfernt werden. Bewegt sich das Fahrzeug beispielsweise auf einer zweispurigen Straße, so befindet sich auf der einen Fahrzeugseite eine freie Fahrzeugspur. Diese kann durch eine Auswertung der Merkmale direkt erkannt und von einer Übertragung an das Backend ausgeschlossen werden.

Im einer weiteren Variante werden alle Merkmale außer Start und Ende eines Objekts von der Übertragung ausgeschlossen. Dies ist analog dem vorherigen Beispiel durch eine simple Filterung der Daten nach Merkmalen möglich.

### Bezugszeichenliste

- 10: Erfassen von Sensordaten entlang einer Wegstrecke
- 11: Identifizieren von Merkmalen und Kontextinformationen
- 12: Zusammenfassen der Merkmale und der Kontextinformationen zu einer Nachricht
- 13: Übermitteln der Nachricht an ein Backend
- 20: Vorrichtung
- 21: Eingang
- 22: Analyseeinheit
- 23: Datenverarbeitungseinheit
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Kraftfahrzeug
- 41: Ultraschallsensoren
- 42: Umgebungssensorik
- 43: Navigationssystem
- 44: Netzwerk
- 45: Speicher
- 46: Datenübertragungseinheit
- 47: Parklenkassistent
- 50: Backend
- A: Abstandsprofil
- AP: Abstand eines Objekts von Segmentgrenze
- AS: Abstand eines Objekts vom Kraftfahrzeug
- O: Objekt
- S: Segment
- SG: Segmentgrenze
- WS: Wegstrecke

## Patentansprüche

1. Computerimplementiertes Verfahren zum Verarbeiten von Daten in einem Kraftfahrzeug (40) für einen Versand an ein Backend (50), mit den Schritten:
- Erfassen (10) von Sensordaten entlang einer Wegstrecke (WS) des Kraftfahrzeugs (40);
- Einteilung der Wegstrecke (WS) in Segmente;
- Identifizieren (11) von Merkmalen und Kontextinformationen zu den Merkmalen innerhalb der Segmente der Wegstrecke (WS) anhand der Sensordaten, wobei die Merkmale Objekte (O) entlang der Wegstrecke (WS) klassifizieren und die Kontextinformationen zu den Merkmalen senkrecht zur Wegstrecke (WS) bestimmte Abstände (AS) zwischen dem Kraftfahrzeug (40) und einem erkannten Objekt (O) oder parallel zur Wegstrecke (WS) bestimmte Abstände (AP) zwischen einer Segmentgrenze (SG) und dem Anfang oder Ende eines Objekts (O) beschreiben; und
- Zusammenfassen (12) der Merkmale und der Kontextinformationen zu den Merkmalen zu einer Nachricht für die Wegstrecke (WS), die die Anordnung der erkannten Objekte (O) entlang der Wegstrecke (WS) beschreibt.

2. Computerimplementiertes Verfahren gemäß Anspruch 1, mit dem Schritt:
- Übermitteln (13) der Nachricht an das Backend (50).

3. Computerimplementiertes Verfahren gemäß Anspruch 1 oder 2, wobei es sich bei den Sensordaten um ein Abstandsprofil (A) handelt, das durch Abstandssensoren (41) des Kraftfahrzeugs (40) ermittelt wird.

4. Computerimplementiertes Verfahren gemäß einem der vorherigen Ansprüche, wobei es sich bei den Merkmalen um eines oder mehrere der folgenden Elemente handelt: Objekt mit konstantem Abstand, Objekt mit variablem Abstand, Freibereich, Anfang eines Objekts, Ende eines Objekts, Anfang eines erkannten niedrigen Objekts, Ende eines erkannten niedrigen Objekts, Keine Daten.

5. Computerimplementiertes Verfahren gemäß einem der vorherigen Ansprüche, wobei die senkrecht zur Wegstrecke (WS) bestimmten Abstände (AS) prozentual in Bezug auf einen maximal detektierbaren Abstand angegeben werden und die parallel zur Wegstrecke (WS) bestimmten Abstände (AP) prozentual in Bezug auf die Länge eines Segments angegeben werden.

6. Computerimplementiertes Verfahren gemäß einem der vorherigen Ansprüche, wobei die Wegstrecke (WS) in acht Segmente (S) unterteilt wird.

7. Computerimplementiertes Verfahren gemäß einem der vorherigen Ansprüche, wobei die Wegstrecke (WS) durch eine in einem vorgegebenen Zeitintervall zurückgelegte Strecke bestimmt ist.

8. Computerlesbares Speichermedium mit Instruktionen, die bei Ausführung durch einen Computer den Computer zur Ausführung der Schritte eines Verfahrens gemäß einem der Ansprüche 1 bis 7 zum Verarbeiten von Daten in einem Kraftfahrzeug (40) für einen Versand an ein Backend (50) veranlassen.

9. Vorrichtung (20) zum Verarbeiten von Daten in einem Kraftfahrzeug (40) für einen Versand an ein Backend (50), mit
- einem Eingang (21), der eingerichtet ist, entlang einer Wegstrecke (WS) des Kraftfahrzeugs (40) erfasste (10) Sensordaten zu empfangen;
- einer Analyseeinheit (22), die eingerichtet ist, die Wegstrecke (WS) in Segmente zu unterteilen und Merkmale und Kontextinformationen zu den Merkmalen innerhalb der Segmente der Wegstrecke (WS) anhand der Sensordaten zu identifizieren (11), wobei die Merkmale Objekte (O) entlang der Wegstrecke (WS) klassifizieren und die Kontextinformationen zu den Merkmalen senkrecht zur Wegstrecke (WS) bestimmte Abstände (AS) zwischen dem Kraftfahrzeug (40) und einem erkannten Objekt (O) oder parallel zur Wegstrecke (WS) bestimmte Abstände (AP) zwischen einer Segmentgrenze (SG) und dem Anfang oder Ende eines Objekts (O) beschreiben; und
- einer Datenverarbeitungseinheit (23), die eingerichtet ist, die Merkmale und die Kontextinformationen zu den Merkmalen zu einer Nachricht für die Wegstrecke (WS) zusammenzufassen (12), die die Anordnung der erkannten Objekte (O) entlang der Wegstrecke (WS) beschreibt.

10. Kraftfahrzeug (40), **dadurch gekennzeichnet, dass** es eine Vorrichtung (20) gemäß Anspruch 9 aufweist oder eingerichtet ist, ein Verfahren gemäß einem der Ansprüche 1 bis 7 zum Verarbeiten von Daten für einen Versand an ein Backend (50) auszuführen.

## Claims

1. Computer-implemented method for processing data in a motor vehicle (40) for transmission to a backend (50), comprising the following steps:
- recording (10) sensor data along a stretch of road (WS) travelled by the motor vehicle (40);
- dividing the stretch of road (WS) into segments;
- identifying (11) features and context information relating to the features within the segments of the stretch of road (WS) on the basis of the sensor data, wherein the features classify objects (O) along the stretch of road (WS) and the context information relating to the features describe distances (AS) determined perpendicular to the stretch of road (WS) between the motor vehicle (40) and a recognized object (O) or distances (AP) determined parallel to the stretch of road (WS) between a segment limit (SG) and the start or end of an object (0); and
- combining (12) the features and the context information relating to the features to form a message for the stretch of road (WS) that describes the arrangement of the recognized objects (O) along the stretch of road (WS).

2. Computer-implemented method according to Claim 1, comprising the following step:
- transmitting (13) the message to the backend (50).

3. Computer-implemented method according to Claim 1 or 2, wherein the sensor data involves a distance profile (A) that is ascertained by distance sensors (41) of the motor vehicle (40).

4. Computer-implemented method according to one of the preceding claims, wherein the features include one or more of the following elements: object at a constant distance, object at a variable distance, free area, start of an object, end of an object, start of a recognized low object, end of a recognized low object, no data.

5. Computer-implemented method according to one of the preceding claims, wherein the distances (AS) determined perpendicular to the stretch of road (WS) are given as a percentage in relation to a maximum detectable distance and the distances (AP) determined parallel to the stretch of road (WS) are given as a percentage in relation to a length of a segment.

6. Computer-implemented method according to one of the preceding claims, wherein the stretch of road (WS) is divided into eight segments (S).

7. Computer-implemented method according to one of the preceding claims, wherein the stretch of road (WS) is determined by a stretch that is travelled in a predetermined time interval.

8. Computer-readable storage medium comprising instructions that, when executed by a computer, cause the computer to carry out the steps of a method according to one of Claims 1 to 7 for processing data in a motor vehicle (40) for transmission to a backend (50).

9. Device (20) for processing data in a motor vehicle (40) for transmission to a backend (50), comprising
- an input (21) that is set up to receive sensor data that is recorded (10) along a stretch of road (WS) travelled by the motor vehicle (40);
- an analysis unit (22) that is set up to divide the stretch of road (WS) into segments and to identify (11) features and context information relating to the features within the segments of the stretch of road (WS) on the basis of the sensor data, wherein the features classify objects (O) along the stretch of road (WS) and the context information relating to the features describe distances (AS) determined perpendicular to the stretch of road (WS) between the motor vehicle (40) and a recognized object (O) or distances (AP) determined parallel to the stretch of road (WS) between a segment limit (SG) and the start or end of an object (0); and
- a data processing unit (23) that is set up to combine (12) the features and the context information relating to the features to form a message for the stretch of road (WS) that describes the arrangement of the recognized objects (O) along the stretch of road (WS).

10. Motor vehicle (40), **characterized in that** it comprises a device (20) according to Claim 9 or is set up to carry out a method according to one of Claims 1 to 7 for processing data for transmission to a backend (50).

## Revendications

1. Procédé informatisé de traitement de données dans un véhicule automobile (40) pour les envoyer à une partie dorsale (back-end) (50), ledit procédé comprenant les étapes suivantes :
- acquérir (10) des données de capteurs le long d'un itinéraire (WS) du véhicule automobile (40) ;
- diviser l'itinéraire (WS) en segments ;
- identifier (11) des caractéristiques et des informations contextuelles relatives aux caractéristiques à l'intérieur des segments de l'itinéraire (WS) sur la base des données de capteur, les caractéristiques classant des objets (O) le long de l'itinéraire (WS) et les informations contextuelles relatives aux caractéristiques décrivant des distances (AS), déterminées perpendiculairement à l'itinéraire (WS), entre le véhicule automobile (40) et un objet détecté (O) ou des distances (AP), déterminées parallèlement à l'itinéraire (WS), entre une limite de segment (SG) et le début ou la fin d'un objet (O) ; et
- rassembler (12) les caractéristiques et les informations contextuelles relatives aux caractéristiques pour former un message qui est destiné à l'itinéraire (WS) et qui décrit l'agencement des objets détectés (O) le long de l'itinéraire (WS).

2. Procédé informatisé selon la revendication 1, ledit procédé comprenant l'étape suivante :
- transmettre (13) le message à la partie dorsale (50) .

3. Procédé informatisé selon la revendication 1 ou 2, les données de capteur étant un profil de distance (A) qui est déterminé par des capteurs de distance (41) du véhicule automobile (40).

4. Procédé informatisé selon l'une des revendications précédentes,
les caractéristiques étant un ou plusieurs des éléments suivants : objet à distance constante, objet à distance variable, zone de dégagement, début d'objet, fin d'objet, début d'objet bas détecté, fin d'un objet bas détecté, pas de données.

5. Procédé informatisé selon l'une des revendications précédentes,
les distances (AS), déterminées perpendiculairement à l'itinéraire (WS), étant indiquées en pourcentage d'une distance maximale détectable et les distances (AP), déterminées parallèlement à l'itinéraire (WS), étant indiquées en pourcentage de la longueur d'un segment.

6. Procédé informatisé selon l'une des revendications précédentes,
l'itinéraire (WS) étant divisé en huit segments (S).

7. Procédé informatisé selon l'une des revendications précédentes,
l'itinéraire (WS) étant déterminé par un tronçon parcouru dans un intervalle de temps spécifié.

8. Support de stockage lisible par ordinateur comportant des instructions qui, lorsqu'elles sont exécutées par un ordinateur, ordonnent à celui-ci de réaliser les étapes d'un procédé selon l'une des revendications 1 à 7 pour traiter des données dans un véhicule automobile (40) afin de les envoyer à une partie dorsale (50).

9. Dispositif (20) de traitement de données dans un véhicule automobile (40) pour les envoyer à une partie dorsale (50), ledit dispositif comprenant
- une entrée (21) qui est conçue pour recevoir des données de capteur acquises (10) le long d'un itinéraire (WS) du véhicule automobile (40) ;
- une unité d'analyse (22) qui est conçue pour subdiviser l'itinéraire (WS) en segments et pour identifier des caractéristiques et des informations contextuelles relatives aux caractéristiques à l'intérieur des segments de l'itinéraire (WS) sur la base des données de capteur (11), les caractéristiques classant des objets (O) le long de l'itinéraire (WS) et les informations contextuelles relatives aux caractéristiques décrivant des distances (AS), déterminées perpendiculairement à l'itinéraire (WS), entre le véhicule automobile (40) et un objet détecté (O) ou des distances (AP), déterminées parallèlement à l'itinéraire (WS), entre une limite de segment (SG) et le début ou la fin d'un objet (O) ; et
- une unité de traitement de données (23) qui est conçue pour rassembler (12) les caractéristiques et les informations contextuelles relatives aux caractéristiques afin de former un message qui est destiné à l'itinéraire (WS) et qui décrit l'agencement des objets détectés (O) le long de l'itinéraire (WS).

10. Véhicule automobile (40), **caractérisé en ce qu'**il comporte un dispositif (20) selon la revendication 9 ou est conçu pour mettre en œuvre un procédé selon l'une des revendications 1 à 7 pour le traitement de données à envoyer à une partie dorsale (50).
